# EUROPÄISCHE PATENTANMELDUNG

(11) **EP 0 833 094 A2**
(43) Veröffentlichungstag der Anmeldung: **01.04.1998**
(21) Anmeldenummer: 96119275.4
(22) Anmeldetag: 02.12.1996
(51) Int. Cl.: F16L 41/02

(54) **Aufschweiszsattel aus Kunststoff zur Herstellung eines Abzweiganschlusses an einem Kunststoffrohr**

(30) Priorität: 25.09.1996 DE 19639365
(71) Anmelder: Rosenberg, Gerhard, 57439 Attendorn-Ennest (DE)
(72) Erfinder: Rosenberg, Gerhard, 57439 Attendorn-Ennest (DE)
(74) Vertreter: Pürckhauer, Rolf, Dipl.-Ing.

(57) **Zusammenfassung**

Der Aufschweißsattel (1) aus Kunststoff zur Herstellung eines Abzweiganschlusses an einem Hauptrohr (2) aus Kunststoff besitzt einen an dem Sattelkörper (3) angeformten Anschlußstutzen (4), in den ein Abzweigrohr (5) aus Kunststoff eingeschweißt ist.

An der zylindrischen Auflagefläche (6) des Sattelkörpers (3) ist koaxial zum Anschlußstutzen (4) ein Einschweißstutzen (7) einteilig angeformt.

Der Aufschweißsattel (1) ist mit dem Einschweißstutzen (7) in eine entsprechende Bohrung (9) in der Wand (8) des Hauptrohres (2) eingeschweißt und mit der Auflagefläche (6) am Außenmantel (10) des Hauptrohres (2) angeschweißt.

Die Länge (11) des Einschweißstutzens (7) ist größer bemessen als die Wandstärke (12) des Hauptrohres (2), so daß die Dichtheit der Schweißverbindung von Aufschweißsattel (1) und Hauptrohr (2) bei den im Hauptrohr (2) und dem Abzweigrohr (5) auftretenden Drücken und Temperaturen des durch die Rohre strömenden Mediums gewährleistet ist und eine hohe Widerstandsfähigkeit der Schweißverbindung gegen äußere Krafteinwirkung erreicht wird.

## Beschreibung

Die Erfindung betrifft Aufschweißsättel aus Kunststoff zur Herstellung von Abzweiganschlüssen an Kunststoffrohren, mit einem an dem Sattelkörper angeformten Anschlußstutzen zur Befestigung eines Abzweigrohres, einer Armatur oder dgl. sowie einer zylindrischen Auflagefläche zum Festschweißen des Sattelkörpers am Außenmantel eines Hauptrohres (Prospekt "fusiotherm Rohrleitungssystem", 1994 der Firma aquatherm GmbH, 57439 Attendorn-Biggen).

Auf dem Markt erhältliche Aufschweißsättel dieser Art werden mit einem elektrischen Handschweißgerät auf den Kunststoffrohren aufgeschweißt, das ein Heizschwert aufweist, an dessen beiden Seiten Schweißwerkzeuge zum Erhitzen des Außenmantels der Rohre und der Auflagefläche der Aufschweißsättel angeschraubt sind. Zur Herstellung der Schweißverbindung zwischen Aufschweißsattel und Rohr wird zunächst das auf ungefähr 260°C erhitzte Schweißwerkzeug zum Erhitzen der Außenmantelfläche des Rohres mit dem Handschweißgerät auf das Rohr aufgesetzt und die Kunststoffaußenschicht des Rohres an der Anschweißstelle angeschmolzen bzw. plastifiziert. Ohne Unterbrechung des Erhitzungsvorgangs der Rohrmantelfläche wird anschließend der Aufschweißsattel auf das auf ungefähr 260°C erhitzte Sattelschweißwerkzeug des mit dem Rohrschweißwerkzeug auf dem Rohr aufliegenden Schweißgerätes aufgesetzt und die Auflagefläche des Aufschweißsattels angeschmolzen. Danach wird das Schweißgerät vom Rohr entfernt und der Aufschweißsattel mit der plastifizierten Auflagefläche auf die plastifizierte Anschweißfläche des Rohraußenmantels gedrückt. Nach dem Schweißvorgang, der eine bestimmte Abkühlzeit erfordert, werden zur Herstellung eines Abzweiganschlusses, der durch eine Rohr-Stützhülse aus Metall verstärkt werden kann, der Boden des Aufschweißsattels und die von diesem überdeckte Rohrwand durchgebohrt.

Die Praxis hat gezeigt, daß mit dem verwendeten Handschweißgerät wegen der Länge des Spiegelschwertes eine gleichmäßige ruhige Auflage des Rohrschweißwerkzeuges auf der Anschweißfläche des Rohraußenmantels nicht erreicht werden kann. Dadurch wird die Anschweißfläche des Rohres nicht gleichmäßig angeschmolzen und eine homogene Schweißverbindung zwischen Aufschweißsattel und Rohr verhindert. Eine derart fehlerhafte Schweißverbindung kann zu Undichtigkeiten in einem Rohrleitungssystem führen, und unter äußerer Krafteinwirkung besteht die Gefahr, daß der Aufschweißsattel abreißt.

Der Erfindung liegt die Aufgabe zugrunde, den gattungsgemäßen Aufschweißsattel im Hinblick auf eine funktionssichere Verschweißbarkeit mit Kunststoffrohren weiterzuentwickeln.

Diese Aufgabe ist erfindungsgemäß gelöst durch einen Aufschweißsattel mit den Merkmalen des Patentanspruchs 1.

Der Unteranspruch beinhaltet eine vorteilhafte und zweckmäßige Weiterbildung des neuen Aufschweißsattels.

Der an die Auflagefläche des Sattelkörpers des Aufschweißsattels angeformte Einschweißstutzen, der koaxial zu dem Anschlußstutzen des Aufschweißsattels für ein Abzweigrohr angeordnet ist, ermöglicht eine dichte und gegen äußere Krafteinwirkung widerstandsfähige Schweißverbindung des Aufschweißsattels mit einem Rohr.

Die Erfindung ist nachstehend anhand von Zeichnungsfiguren erläutert, die folgendes darstellen:
- Fig. 1: eine Querschnittsdarstellung eines Abzweiganschlusses einer Rohrleitung aus Kunststoff und
- Fig. 2: eine Querschnittsdarstellung eines Schweißgerätes mit Schweißwerkzeugen zum Anschmelzen des Einschweißstutzens und der Auflagefläche des Aufschweißsattels sowie der Wand der Bohrung im Kunststoffrohr zur Aufnahme des Einschweißstutzens des Aufschweißsattels.

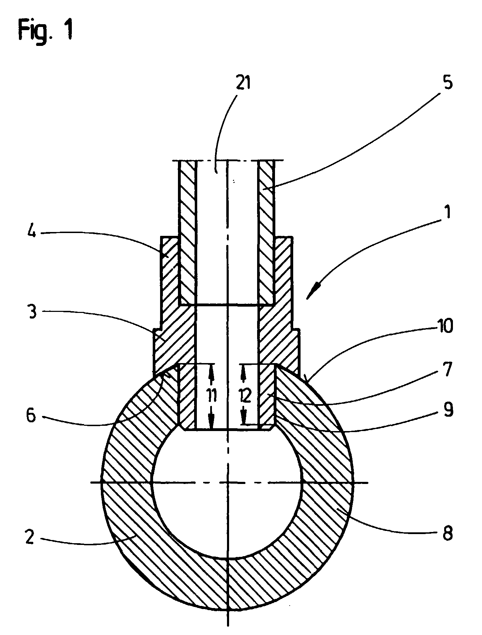

Der eine Durchgangsbohrung 21 aufweisende Aufschweißsattel 1 aus Kunststoff zur Herstellung eines Abzweiganschlusses an einem Hauptrohr 2 aus Kunststoff gemäß Fig. 1 besitzt einen an dem Sattelkörper 3 angeformten Anschlußstutzen 4, in den ein Abzweigrohr 5 aus Kunststoff eingeschweißt ist.

An der zylindrischen Auflage- bzw. Anschweißfläche 6 des Sattelkörpers 3 ist koaxial zum Anschlußstutzen 4 ein Einschweißstutzen 7 einteilig angeformt.

Der Aufschweißsattel 1 ist mit dem Einschweißstutzen 7 in eine entsprechende Bohrung 9 in der Wand 8 des Hauptrohres 2 eingeschweißt und mit der Auflagefläche 6 am Außenmantel 10 des Hauptrohres 2 angeschweißt.

Die Länge 11 des Einschweißstutzens 7 des Aufschweißsattels 1 ist größer bemessen als die Wandstärke 12 des Hauptrohres 1, so daß die Dichtheit der Schweißverbindung von Aufschweißsattel 1 und Hauptrohr 2 bei den im Hauptrohr 2 und dem Abzweigrohr 5 auftretenden Drücken und Temperaturen des durch die Rohre strömenden Mediums gewährleistet ist und eine hohe Widerstandsfähigkeit der Schweißverbindung gegen äußere Krafteinwirkung erreicht wird.

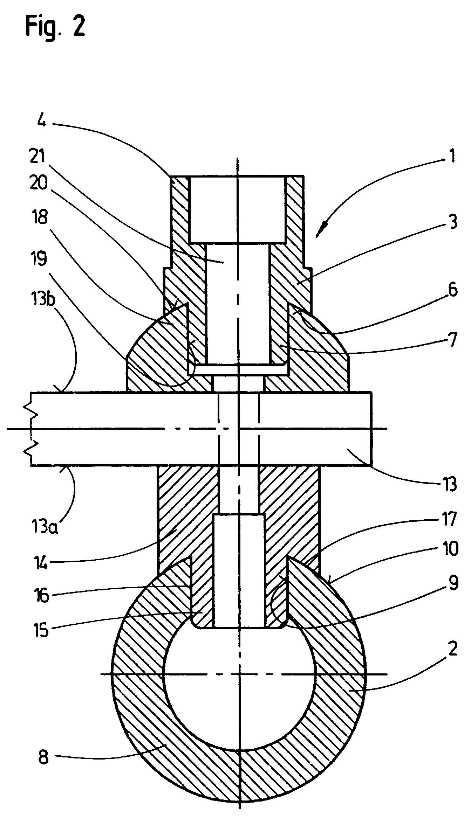

Zur Herstellung der Schweißverbindung zwischen Aufschweißsattel 1 und Hauptrohr 2 wird entsprechend der Darstellung in Fig. 2 zunächst das aufgeheizte Schweißwerkzeug 14, das an der Unterseite 13a des Heizschwertes 13 des nicht vollständig darstellten Handschweißgerätes angeschraubt ist und das eine der Form des Aufschweißsattels 1 entsprechende Form aufweist, mit dem Handschweißgerät auf die Stelle des Hauptrohres 2 aufgesetzt, an der sich die zuvor in die Rohrwand 8 eingebrachte Bohrung 9 für den Einschweißstutzen 7 des Aufschweißsattels 1 befindet, derart, daß der in der Bohrung 9 im Hauptrohr 2 sitzende aufgeheizte Heizdorn 15 des Schweißwerkzeugs 14 die Bohrungswand 16 und die erhitzte Heizfläche 17 des Schweißwerkzeugs 14 den zylindrischen Außenmantel 10 des Hauptrohres 2 im Bereich der Aufnahmebohrung 9 für den Einschweißstutzen 7 des Aufschweißsattels 1 anschmelzt bzw. plastifiziert.

Ferner wird der Aufschweißsattel 1 auf das aufgeheizte Schweißwerkzeug 18 aufgesetzt, das an der Oberseite 13b des Heizschwertes 13 des Handschweißgerätes angeschraubt ist und das eine der Form des Aufschweißsattels 1 entsprechende Form aufweist, derart, daß die Oberfläche des in eine entsprechende Heizbohrung 19 des Schweißwerkzeugs 18 eintauchenden Einschweißstutzens 7 und die an einer zylindrischen Heizfläche 20 des Schweißwerkzeugs 18 anliegende Auflagefläche 6 des Einschweißstutzens 7 des Aufschweißsattels 1 angeschmolzen bzw. plastifiziert werden.

Anschließend wird das Handschweißgerät von dem Hauptrohr 2 und der Aufschweißsattel 1 von dem Schweißwerkzeug 18 des Handschweißgerätes abgenommen, und danach wird der Aufschweißsattel 1 von Hand auf das Hauptrohr 2 aufgedrückt, derart, daß der Einschweißstutzen 7 des Aufschweißsattels 1 mit der Wand 16 der Bohrung 9 in der Rohrwand 8 und die Auflagefläche 6 des Sattelkörpers 3 des Aufschweißsattels 1 mit dem zylindrischen Außenmantel 10 des Hauptrohres 2 im Bereich der Aufnahmebohrung 9 für den Einschweißstutzen 7 verschweißt.

## Patentansprüche

1. Aufschweißsattel aus Kunststoff zur Herstellung eines Abzweiganschlusses an einem Kunststoffrohr, mit einem an dem Sattelkörper angeformten Anschlußstutzen zur Befestigung eines Abzweigrohres, einer Armatur oder dgl. sowie einer zylindrischen Auflagefläche zum Festschweißen des Sattelkörpers am Außenmantel eines Hauptrohres, gekennzeichnet durch einen an der Auflagefläche (6) des Sattelkörpers (3) angeformten, koaxial zum Anschlußstutzen (4) angeordneten Einschweißstutzen (7) zur Befestigung des Aufschweißsattels (1) in einer entsprechenden Bohrung (9) in der Wand (8) des Hauptrohres (2).

2. Aufschweißsattel nach Anspruch 1, dadurch gekennzeichnet, daß die Länge (11) des Einschweißstutzens (7) des Aufschweißsattels (1) größer bemessen ist als die Wandstärke (12) des Hauptrohres (2).
